# EUROPEAN PATENT SPECIFICATION

(11) **EP 2 400 205 B1**
(45) Date of publication and mention of the grant of the patent: **13.11.2013**
(21) Application number: 11171393.9
(22) Date of filing: 24.06.2011
(51) Int. Cl.: F16M 13/02

(54) **Quick fastening device for television sets**
Schnellbefestigungsanordnung für Fernsehgeräte
Dispositif de fixation rapide pour les postes de télévision

(30) Priority: 25.06.2010 IT MI20101160
(43) Date of publication of application: 28.12.2011
(73) Proprietor: OMB S.r.l., 38070 Stenico, TRENTO (IT)
(72) Inventor: Bailo, Carlo, I-38070 Stenico, TRENTO (IT)
(74) Representative: Crippa, Paolo Ernesto

(56) References cited:
- EP-A2- 2 216 582
- WO-A1-2010/013176
- WO-A2-2008/054720
- US-A1- 2007 018 062
- US-A1- 2008 083 865

## Description

The object of this invention is a quick fastening device for television sets.

The known fastening devices are used to fix television sets to a surface and include the use of fastening brackets attached to the surface suitable for holding fastening pins fixed to the television set so as to connect the latter to such plates.

Said devices are not free of faults.

In fact, as it is well known, it is difficult during installation to position the fastening pins correctly so that they are attached to the television set so as to align their position with the relative fastening seats of the brackets. With reference to document DK 2008 00060 U3, it is evident that the installation is complicated by the fact that the television set must be positioned with respect to the brackets so that the fastening pins can be inserted into the respective seats, working with reduced visibility due to the dimensions of said television set.

The purpose of this invention is to devise and make available a device that permits an at least partial avoidance of the above-mentioned disadvantages with reference to the known technology.

In particular, the task of this invention is to provide a quick fastening device that allows a quick and easy levelling of a TV-set after the installation on a wall of the latter.

Such a purpose and such tasks are achieved by means of a device according to claim 1.

According to the present invention, a quick fastening device for television sets comprises
- a pair of fastening brackets suitable for being fixedly connected to a surface onto which it is wished to fix a television set;
- a pair of fastening pins suitable for being fixedly connected to the television set;
- each of said fastening brackets comprises an attachment plane suitable for facing the surface onto which it is wished to fix the television set and a fastening plane spaced from the attachment plane suitable for facing the television set that it is wished to fixedly connect;
- each of said fastening brackets comprises at least one fastening seat (6,6'), arranged on the fastening plane, which receives said fastening pin so as to determine an undercut fixed connection between said fastening pin and said fastening seat;
- each of said fastening seats comprises a perimeter that defines the shape of the seat with respect to the fastening bracket in which such a perimeter comprises at least one section;
- the section of the perimeter of each said fastening seats that lies on the fastening plane is an open section so as to be suitable for allowing the television to be fixedly connected to the surface in which said fastening pin is received by said fastening seat with motion substantially parallel to the fastening plane;
- each of the fastening seats comprises an entry area arranged to coincide with the section of the perimeter that is open on the fastening seat (6, 6'), and an inclined adjustment channel wherein the fastening pins can run and wherein the pin can be positioned in a plurality of stable positions along the length of said adjustment channel;
- each of the fastening seats comprises a sliding channel in which the fastening pin can slide, which departs from the entry area and flows into the adjustment channel;
- the adjustment channel is arranged in a manner substantially transverse to the sliding channel which substantially extends according to the direction of application of the force of gravity;
- each of the fastening seats is in the shape of an opening passing through the fastening bracket.

According to the present invention, the section of the perimeter of said fastening seats that lies on the fastening plane is an open section so as to be suitable for allowing the television to be fixedly connected to the surface in which said at least one fastening pin is received by said at least one fastening seat with motion substantially parallel to the fastening plane.

Further characteristics and advantages of the device according to the invention are evident from the below description of exemplary preferred embodiments, which are given for indicative purposes and are nonlimiting, with reference to the annexed figures, wherein:
- Figure 1 illustrates an axonometric view of a fastening bracket of a quick fastening device for television sets according to the invention;
- Figure 2 illustrates an orthogonal view of the fastening bracket in Figure 1;
- Figure 3 illustrates an orthogonal view of the fastening bracket in Figure 1;

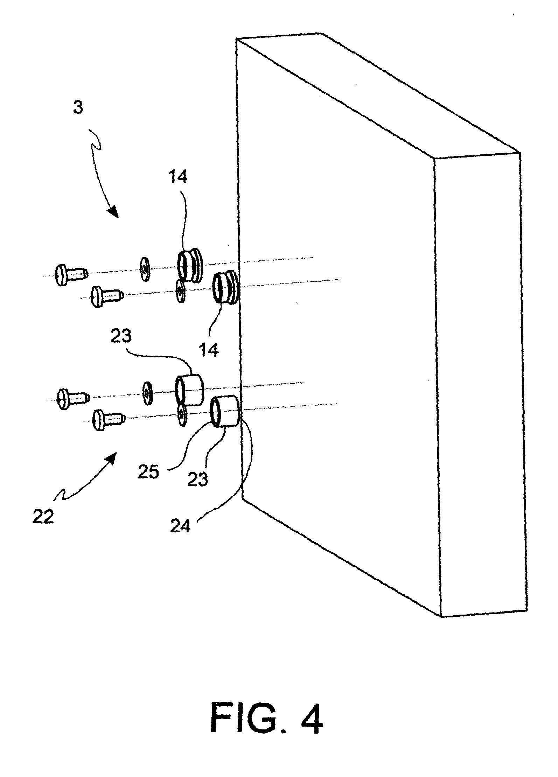

- Figure 4 illustrates an axonometric view of fastening pins and spacing pins in separate parts according to the invention;

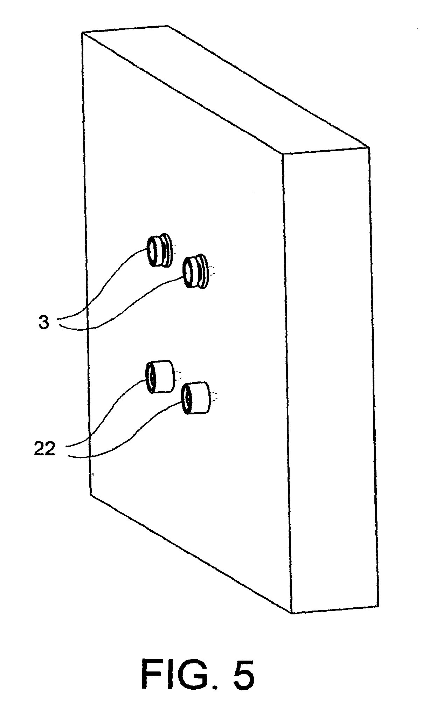

- Figure 5 illustrates an axonometric view of the fastening pins and spacing pins of Figure 4 when assembled;
- Figure 6 illustrates an axonometric view of a quick fastening device for television sets according to the invention;
- Figure 7 illustrates a sectional view of the fastening device of Figure 6 along a longitudinal plane passing through the diameter of a fastening pin;
- Figure 8 illustrates an axonometric view of a fastening bracket according to a further embodiment according to the invention;
- Figure 9 illustrates an orthogonal view of the fastening bracket in Figure 8;
- Figure 10 illustrates a further orthogonal view of the fastening bracket in Figure 8;
- Figure 11 illustrates an axonometric view of an embodiment of a quick fastening device for television sets according to the invention;
- Figure 12 illustrates a sectional view of the fastening device of Figure 11 along a longitudinal plane passing through the diameter of a fastening pin; and
- Figure 13 illustrates an axonometric view of a further embodiment of a quick fastening device for television sets according to the invention.

With reference to the above figures, 1 indicates a quick fastening device for television sets according to the invention as a whole.

The quick fastening device for television sets 1 comprises at least one fastening bracket 2 suitable for being connected to a surface onto which it is desired to fix a television set, and at least one fastening pin 3 suitable for being connected to a television set.

According to one embodiment, said at least one fastening bracket 2 comprises attachment portions 8 suitable for being used to permit the connection of the fastening bracket 2 to the surface to which it is desired to attach the television set.

In particular, said attachment portions 8 comprise a plurality of holes 9 in the form of holes passing through said at least one fastening bracket 2 and, on the installed device, with an axis perpendicular to the plane consisting of the surface to which it is desired to attach the television set.

This plurality of holes 9 is suitable for holding fastening means (not shown in the figures) to permit the connection of the fastening brackets 2 to the surface. According to one embodiment, such fastening means are of the known type, for example bolts, screws, rivets and similar means.

According to one embodiment, a attachment plane 4 can be defined that is substantially parallel to the surface on which it is desired to attach the television set, wherein lie the attachment portions 8 of said at least one fastening bracket 2.

According to one embodiment, the attachment portions 8 are arranged at opposite ends of the fastening bracket 2 so as to guarantee the robust and stable connection of the bracket to the surface.

According to one embodiment, said attachment portions 8 are in the form of laminar portions of the fastening bracket 2 folded so as to be coplanar and lying on the attachment plane 4.

The fastening brackets 2 comprise fastening seats 6 that hold respective fastening pins 3 so as to be able to connect the television set to said at least one fastening bracket 2.

According to one embodiment, said fastening seats 6 are in the shape of an opening passing through the fastening bracket 2 so as to permit the holding of respective fastening pins 3 and to make them run along the length of such fastening seats 6 as will be more fully described below.

According to one embodiment, a fastening plane 5 can be defined that is substantially parallel to the attachment plane 4, positioned at a distance from it and suited to be facing the television set.

According to one embodiment, the fastening seats 6 comprise a perimeter 7 that is substantially the edge of said seats and determines the shape of the seat with respect to the rest of the fastening bracket 2.

Such a perimeter 7 of said fastening seats comprises at least one section 7a.

Such a section of the perimeter 7a of said fastening seats 6 that rests on the fastening plane 5 is an open section.

In other words, the section of the perimeter 7a of the fastening seats 6 that rests on the fastening plane 5 is such as not to be closed.

Still in other terms, the section of the perimeter 7a of the fastening seats 6 that lies on the fastening plane 5 is such as to intersect a bracket perimeter 10 that constitutes the outer edge and therefore the shape of the fastening bracket 2 for the section thereof that lies on the fastening plane 5.

According to one embodiment, the section of the perimeter 7a of the fastening seat 6 and the section of the bracket perimeter 10 of the fastening bracket 2 that lie on the fastening plane 5 are such as to intersect in such a way that the section of the perimeter 7a of the fastening seat 6 is open on such a fastening plane 5.

According to one embodiment, the fastening bracket 2 comprises a bracket portion 11 that lies on the fastening plane 5.

According to one embodiment, the attachment plane 4 and the fastening plane 5 are parallel to one another and positioned at a distance from the bracket portion that joins the attachment portion 8 with respect to the rest of the bracket.

According to one embodiment, the fastening bracket 2 comprises connecting portions 12 that join the attachment portion 8 that lies on the attachment plane 4 to the bracket portion 11 that lies on the fastening plane 5.

According to one embodiment, the fastening brackets 2 are in the shape of a folded lamina that is shaped so as to comprise in a single piece the different parts that constitute it, such as the attachment portion 8 that lies on the attachment plane 4, the bracket portion 11 that lies on the fastening plane 5 and the connecting portions 12 that joint the portions lying on the two listed planes.

In particular, the connecting portions 12 are the laminar parts determined by the folding of the initial lamina to obtain the development of the fastening bracket 2.

In addition, the fastening bracket 2 comprises a first laminar surface 19 substantially suited to being facing the surface on which the television set is fixed and a second laminar surface 20 opposite to the first, substantially suited to being facing the television set. In other words, such first and second laminar surfaces 19 and 20 are the opposite surfaces constituting the lamina that constitutes the fastening bracket 2.

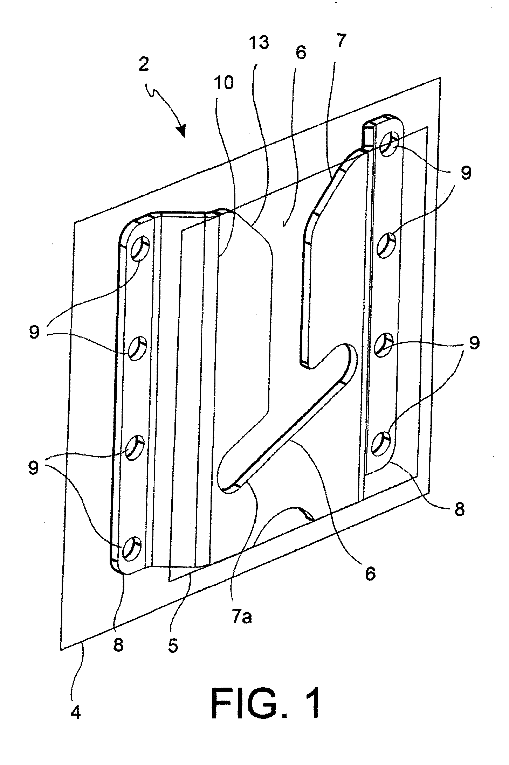

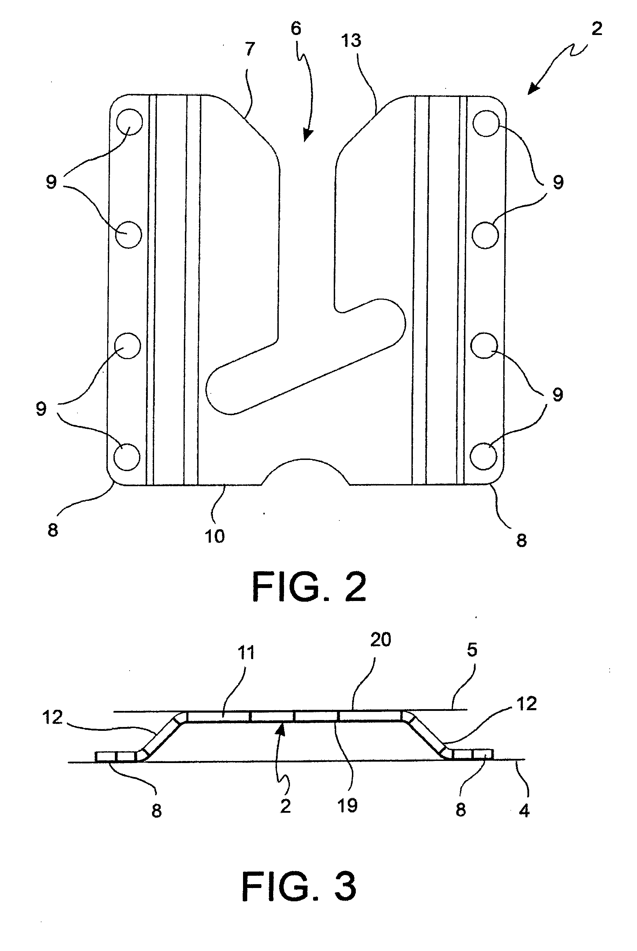

According to one embodiment, with reference to Figures 1 and 2, the fastening seats 6 comprise an entry area 13 arranged to coincide with the section of the perimeter 7a that is open on the fastening seat 6. Such an entry area 13 comprises a larger dimension of the opening of the seat compared to the remaining part of the fastening seat 6.

According to one embodiment, the entry area 13 comprises an opening larger than the rest of the seat with tapered edges starting from the zone in which the perimeter 7 of the seat 6 intersects the bracket perimeter 10 on the fastening plane 5 and continuing to decrease the opening of the seat by moving towards the rest of the seat 6 formed on the fastening bracket 2.

According to one embodiment, the size of the entry area 13 measured along a line parallel to the bracket perimeter 10 intersecting the perimeter 7 of the seat 6 is decreasing, starting from the position near to the open side of the seat 6 moving towards the remaining portion of the seat 6 until it has a portion with a substantially constant size measured in the same way as before.

According to one embodiment, the fastening bracket 2 comprises the section of the perimeter 7a that is open, lying on the fastening plane 5, arranged such as to hold the fastening pin 3 and to be able to make it slide in a direction matching the direction of application of the force of gravity.

According to one embodiment, as shown in Figure 2, the fastening seat 6 of the bracket 2 comprises, in addition to the entry area 13, a sliding channel 26 in which the fastening pins 3 can slide, which flow into an adjustment channel 27 wherein in this case the fastening pins 3 can also run.

According to one embodiment according to the invention, such an adjustment channel 27 is arranged in a manner substantially transverse to the sliding channel 26 which substantially extends according to the direction of application of the force of gravity and is also inclined to the direction parallel to the bracket perimeter 10 where the entry area 13 is arranged.

At the time of installation, the fastening pin 3 is inserted into the fastening seat 6 and made to run to the adjustment channel 27 wherein the pin can be positioned in a plurality of stable positions along the length of said channel 27.

As will be described in the functional example reported below, two fastening brackets 2 are preferably used, which hold 2 fastening pins 3 suited to be fixed to the television set.

According to one embodiment, the pair of fastening brackets 2 that hold the fastening pins 3 possess the same characteristics and are differentiated only by a different arrangement of the adjustment channel 27 of the fastening seats 6.

In fact, the second bracket with a differently arranged adjustment channel 27 is obtained from the first bracket, as described, when it is made symmetrical to a plane passing through the centre line of the sliding channel and on which lies the direction of application of the force of gravity.

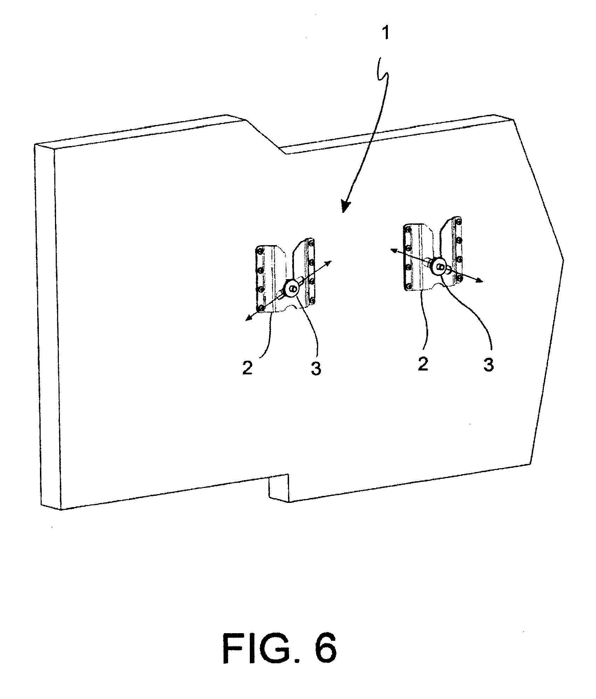

As can be seen in Figure 6, thanks to the fact that the fastening brackets 3 comprise the adjustment channels 27, it is possible to change the angular position of the television set by rotating it about a normal axis to the surface on which the television set is fixed.

In fact, the different inclination of the adjustment channels 27, as described above, permits the fastening pins to be made to run in said channels by making them assume different positions with respect to the direction of application of the force of gravity.

In other words, by making a fastening pin 3 run in the respective adjustment channel 27 which, as described, is inclined, the fastening pin 3 will assume a position that is closer to or more distant from the bracket perimeter 10 comprising the section of the perimeter 7a that is open of the fastening seat 6 and vice versa the additional fastening pin 3 suited to being fixed to the television set will move, according to the movement printed on the television set with which both are integral, in a manner opposite to the previous pin, by way of the different inclination of the corresponding adjustment channel 27, towards a position that is respectively more distant from or closer to the same reference. Such a movement causes the rotation of the television set about a normal axis to the surface of which it is fixed.

The quick fastening device for television sets 1 comprises at least one fastening pin 3 suited to being integrally connected to the television set that is held by the respective fastening seats 6 of said at least one fastening bracket 2.

According to one embodiment, such fastening pins 3 comprise fastening elements 14 with a substantially cylindrical shape comprising a through hole that holds a fastening means suited to making the fastening element 14 an integral part of the television set.

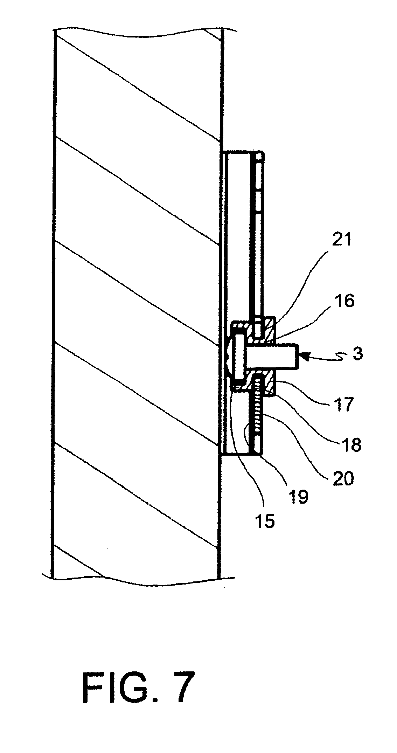

According to one embodiment, as shown in Figure 7, that shows a section along a plane perpendicular to a surface wherein it is desired to fix a television set passing through the diameter of the fastening pin 3 held by the fastening bracket, the fastening element 14 is cylindrical in shape with variable-diameter portions that comprise a first portion with a greater diameter 15, a second portion with a shorter diameter 16 and a third portion with a greater diameter 17.

According to one embodiment, the fastening pins 3 are cylinder-shaped with portions having a variable diameter that comprise a first portion with greater diameter 15, a second portion with a shorter diameter 16 and a third portion with a greater diameter 17 wherein the second portion with a shorter diameter 16 is located between the two other portions with a greater diameter 15 and 17 so that such a portion with a shorter diameter 16 constitutes an undercut region with respect to the rest of said fastening pin 3 so as to be able to create an undercut fixed connection when it is held by said fastening seat 6,6'.

In other words, the second portion with a shorter diameter 16 is located between the two other portions with a greater diameter 15 and 17 so that such portion with a shorter diameter 16 constitutes an undercut region with respect to the rest of the fastening element 14.

In particular, once the assembly of the device 1 has occurred, the fastening pins 3 are held by the relative fastening seats 6 so as to create an undercut fixed connection between these two components.

According to one embodiment, the undercut fixed connection between the fastening pins 3 and the fastening bracket 2 is created thanks to the first portion with a greater diameter 15 that comprises a first annular surface 18 facing the first laminar surface 19 and goes into abutment with said first laminar surface 19 and thanks to the third portion with a greater diameter 17 that comprises a second annular surface 21 facing the second laminar surface 19 that goes into abutment with said second laminar surface 19.

Thus, the fastening element 14 is connected to the fastening bracket 2 since the second portion with a shorter diameter 16 of the fastening element 14 and held by the fastening seat 6 in an undercut as described in the first and second portion with a greater diameter 15 and 17 that go into abutment with the fastening bracket 2.

According to one embodiment, the fastening elements 14 comprise a through hole with an axis coincident with their axis so as to hold a fastening means, for example a screw, suited to connecting the fastening pins integrally to a television set.

According to a further embodiment not shown in the figures, the fastening pins comprise fastening elements with the characteristics already described above and, in addition, in a single part, comprise a threaded pin for connecting the fastening pins directly to a television set.

The quick fastening device for television sets 1 comprises at least one spacer pin 22 suited to being connected to the television set so as to be suited to the opposite part of the pin to the part connected to the television set and to go into abutment with the surface to which it is desired to connect the television set.

Advantageously, said at least one spacer pin 22 permits the surface of a screen of the television set to be kept parallel to the surface to which it is fixed or to vary the inclination of such a screen slightly to this surface.

According to one embodiment, said at least one spacer pin 22 comprises a spacer element 23 with a cylindrical shape with a through hole with an axis coincident to the axis of said spacer element 23, where said hole holds a fastening means suited for connecting the spacer pin 22 integrally to a television set.

According to one embodiment, the spacer element 23 comprises a first circular end 24 suited to go into abutment with a television set and a second circular end 25 suited to go into abutment with a surface to which it is desired to connect the television set.

According to one embodiment, the quick fastening device for television sets 1 comprises two spacer pins 22.

According to one embodiment, Figure 6 shows the fastening brackets 2 fixed to a surface that hold the respective fastening pins 3 in the fastening seats 6. As shown, for convenience of representation, the television set suited for being fixed to the fastening pins 3 connected in an undercut to the fastening brackets 2 has not been shown.

We will now briefly describe the installation procedure of the fastening device 1 and the adjustment of the television set connected to it.

The fastening brackets 2 are connected to the surface to which it is desired to fix the television set, by arranging them in alignment to a plane parallel to a floor of a room and spaced by a preset amount according to the installation parameters, for example associated with the dimensions of the television set.

The fastening pins 3 are made integral with the television set and the spacer pins 22 are also put in place and also connected to the television set.

At this point, the user may pick up the television set and position it close to the surface to which the fastening brackets 2 are connected.

By supporting the television set on the surface by means of the spacer pins 22 that hold the television set at the correct distance from the latter, the fastening pins 3 are positioned so as to be able to be held in the respective fastening seats 6 of the fastening brackets 2.

The user proceeds to move the television set so as bring the fastening pins 3 closer to the respective entry areas 13 of the fastening seats 6.

Advantageously, the entry areas 13 comprise a larger opening than the rest of the fastening seat 6 so as to facilitate the positioning of the pins 3 until the fixed connection is established in an undercut between the latter and the fastening brackets 2.

In addition, the entry areas 13 direct the movement of the fastening pins 3 towards the zone of the fastening seats 6 that determine the undercut fixed connection.

At this point, the user can cause the fastening pins 3 to slide along the sliding channel 26 parallel to the direction of application of the force of gravity until the fastening pins 3 go into abutment with the adjustment channel 27.

At this point, the television set is connected to the fastening brackets 2 and it is possible to rotate it slightly about a normal axis to the surface to which it is connected.

As described above, the fastening pins 3 can be made to slide along the adjustment channel 27 such that, by moving a fastening pin 3 along the adjustment channel towards a position closer to the entry area 13 of the fastening seat 6, together with the additional fastening pin 3, it will move rigidly to the direction of movement of the first fastening pin, both being connected to the same rigid body, in this case a television set.

In particular, the adjustment channels 27 of the two fastening brackets 2 are orientated to each other symmetrically with respect to a plane perpendicular to the surface to which the television set is connected and directly parallel to the direction of action of the force of gravity, when this plane of symmetry is arranged at the centre line between the two fastening brackets.

Therefore, by moving the fastening pin 3 of the first fastening bracket 2 towards a position closer to the entry area 13, the fastening pin 3 of the second fastening bracket 2 moves to a zone further away from the entry area 13 of the fastening seat 6.

It is thus possible to rotate the television set slightly about a normal axis to the surface to which it is fixed, so as to adjust it correctly without having to change the positioning of the fastening brackets 2, even when they have been fixed to each other with slight misalignment.

According to another general embodiment, the quick fastening device for television sets 1 comprises at least one fastening bracket 2' that comprises attachment portions 8' suited for being used to permit the connection of said at least one fastening bracket 2' to the surface to which it is desired to attach a television set.

In particular, said attachment portions 8' comprise a number of holes 9' in the form of holes passing through the fastening bracket and, on the installed device, with an axis perpendicular to the plane consisting of the surface to which it is desired to attach a television set.

This plurality of holes 9' is suitable for holding fastening means (not shown in the figures) to permit the connection of the fastening brackets 2' to the surface.

According to one embodiment, such fastening means are of the known type, for example bolts, screws, rivets and similar means.

According to one embodiment, a attachment plane 4' can be defined that is substantially parallel to the surface on which it is desired to attach the television set, wherein lie the attachment portions 8 of the fastening brackets 2'.

According to one embodiment, the attachment portions 8' are arranged at opposite ends of the fastening bracket 2' so as to guarantee the robust and stable connection of the bracket to the surface.

According to one embodiment, said attachment portions 8' are in the form of laminar sections of the fastening bracket 2' folded so as to be coplanar and lying on the attachment plane 4'.

The fastening brackets 2' comprise fastening seats 6' that hold respective fastening pins 3 so as to be able to connect the television set to said at least one fastening bracket 2'.

According to one embodiment, said fastening seats 6' are in the shape of an opening passing through the fastening brackets 2' so as to permit the holding of respective fastening pins 3' and to make them run along the length of such fastening seats 6' as will be more fully described below.

According to one embodiment, a fastening plane 5' can be defined that is substantially parallel to the attachment plane 4', positioned at a distance from it and suitable to be facing the television set.

According to one embodiment, the fastening seats 6' comprise a perimeter 7' that is substantially the edge of said seats and determines the shape of the seat with respect to the rest of the fastening bracket 2'.

Such a perimeter comprises at least two sections (7a', 7b').

The section of the perimeter 7a' of said fastening seats 6 that rests on the fastening plane 5 is open.

In particular, the section of the perimeter (7b') of said fastening seats 6' does not rest on the fastening plane 5 and determines the closure of the perimeter 7' of the fastening seats 6'.

In other words, the section of the perimeter 7a' of the fastening seats 6' that rests on the fastening plane 5' is such as not to be closed.

Still in other terms, the section of the perimeter 7a' of the fastening seats 6' that lies on the fastening plane 5' is such as to intersect a bracket perimeter 10' that constitutes the outer edge and therefore the shape of the fastening bracket 2' for the section thereof that lies on the fastening plane 5'.

According to one embodiment, the section of the perimeter 7a' of the fastening seat 6' and the bracket perimeter 10' of the fastening bracket 2' that lie on the fastening plane 5' are such as to intersect in such a way that the perimeter of the fastening seat 6' is open on such a fastening plane 5'.

According to one embodiment, the fastening bracket 2' comprises a bracket portion 11' that lies on the fastening plane 5'.

According to one embodiment, the bracket portion 11' comprises the section of the perimeter 7a', that is open on the fastening seat 6'.

According to one embodiment, the attachment plane 4' and the fastening plane 5' are parallel to one another and positioned at a distance from the bracket portion that joins the attachment portion 8' to the rest of the bracket.

According to one embodiment, the fastening bracket 2' comprises connecting portions 12' that join the attachment portion 8' that lies on the attachment plane 4' to the bracket portion 11' that lies on the fastening plane 5'.

According to one embodiment, the fastening brackets 2' are in the shape of a folded lamina that is shaped so as to comprise in a single piece the different parts that constitute it, such as the attachment portion 8' that lies on the attachment plane 4', the bracket portion 11' that lies on the fastening plane 5' and the connecting portions 12' that join the portions lying on the two listed planes.

In particular, the connecting portions 12' are the laminar parts determined by the folding of the initial lamina to obtain the development of the fastening bracket 2'.

In addition, the fastening bracket 2' comprises a first laminar surface 19' substantially suited to being facing the surface on which the television set is fixed and a second laminar surface 20' opposite to the first, substantially suited to being facing a television set. In other words, such first and second laminar surfaces 19' and 20' are the opposite surfaces constituting the lamina that constitutes the fastening bracket 2'.

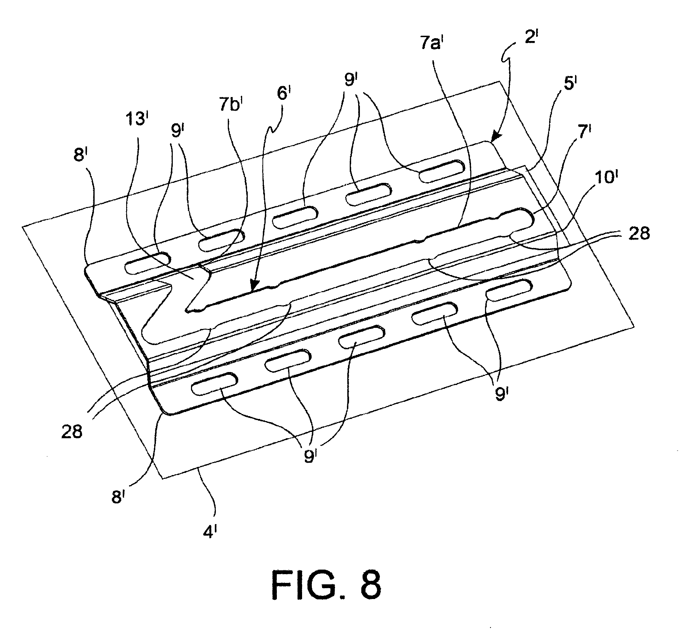

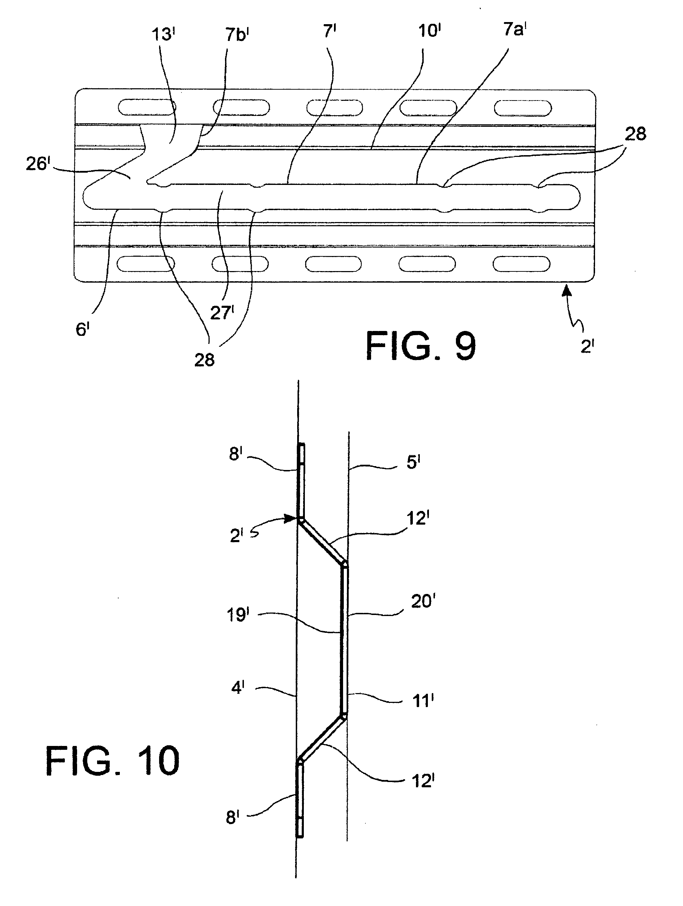

According to one embodiment, with reference to Figures 8 and 9, the fastening seats 6' comprise an entry area 13' arranged to coincide with the section of the perimeter 7' that is open on the fastening seat 6'. Such an entry area 13 comprises a larger dimension of the opening of the seat compared to the remaining part of the fastening seat 6'.

According to one embodiment, the entry area 13' comprises an opening larger than the rest of the seat with tapered edges starting from the zone in which the perimeter 7' of the seat 6' intersects the bracket perimeter 10' on the fastening plane 5' and continuing to decrease the opening of the seat by moving towards the rest of the seat 6 formed on the fastening bracket 2'.

According to one embodiment, the size of the entry area 13' measured along a line parallel to the bracket perimeter 10' intersecting the perimeter 7' of the seat 6' is decreasing, starting from the position near to the open side of the seat 6' moving towards the remaining portion of the seat 6' until it has a portion with a substantially constant size measured in the same way as before.

According to one embodiment, the fastening bracket 2' comprises the section of the perimeter 7a' that is open, lying on the fastening plane 5', arranged such as to hold the fastening pin 3 and to be able to make it slide in a direction matching the direction of application of the force of gravity.

According to one embodiment, as shown in Figure 9, the fastening seat 6' of the bracket 2' comprises, in addition to the entry area 13', a sliding channel 26' in which the fastening pins 3 can slide, which flow into an adjustment channel 27' wherein in this case the fastening pins 3 can also run.

According to one embodiment according to the invention, such an adjustment channel 27' is arranged in a manner substantially transverse to the sliding channel 26' which substantially extends according to the direction of application of the force of gravity.

At the time of installation, the fastening pin 3 is inserted into the fastening seat 6' and made to run to the adjustment channel 27' wherein the pin can be positioned in a plurality of stable positions along the length of said channel 27'.

According to one embodiment, the fastening seat 6' comprises adjustment notches 28 that constitute stable positions that hold the fastening pins 3.

According to one form of adjustment, such adjustment notches 28 are in the form of recesses arranged along the adjustment channel 27', each of which constitutes a stable position in which the fastening pin 3 may be positioned.

As will be described in the functional example reported below, two fastening brackets 2' are preferably used, which hold two fastening pins 3 suited to be fixed to a television set.

According to one embodiment, the pair of fastening brackets 2' that hold the fastening pins 3 possess the same characteristics.

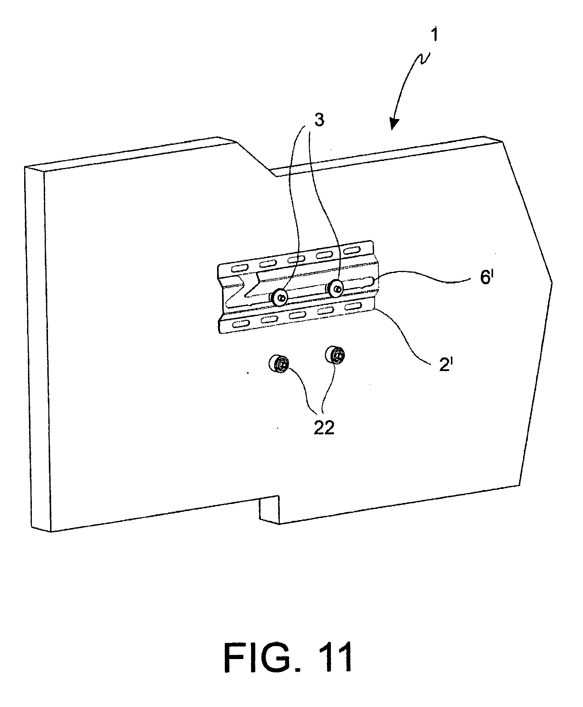

Figure 11 shows the fastening bracket 2', fixed to the surface to which it is desired to connect the television set, that holds the respective fastening pins 3 suited to being connected integrally to a television set. It also shows the spacer pins 22 that are also suited to being connected to the television set and that are suited to holding the surface consisting of a screen of the television set at a predetermined inclination in relation to the surface to which the television set is connected.

According to one embodiment, the quick fastening device for television sets 1 comprises a fastening bracket 2' that holds two fastening pins 3 inside the fastening seats 6' so as to connect the television set to the surface to which it is desired to fix it (Figure 11).

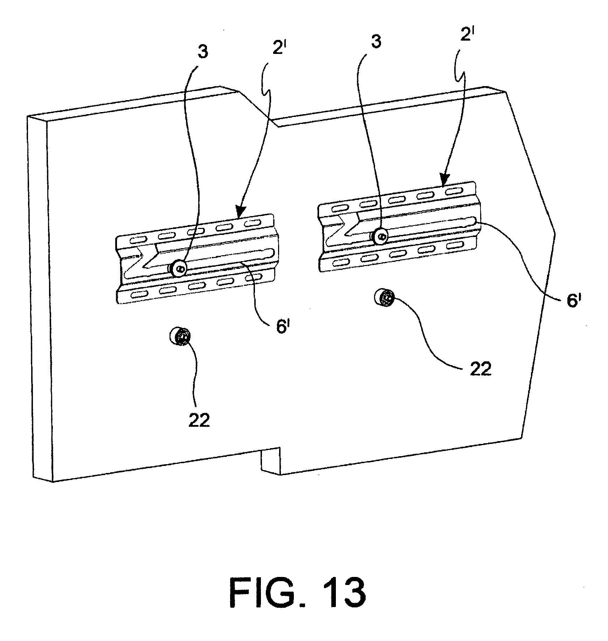

According to one embodiment, as shown in Figure 13, the quick fastening device for television sets 1 comprises two fastening brackets 2' each of which hold one fastening pin 3 respectively inside the fastening seat 6' so as to connect the television set to the surface to which it is desired to fix it.

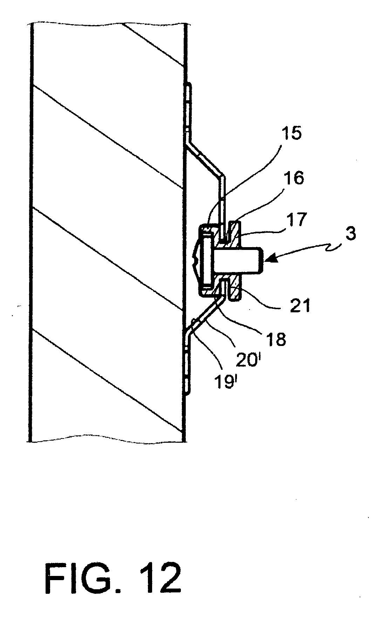

Figure 12 shows a section along a perpendicular plane to the surface to which it is desired to fix the television set, of the fastening bracket 2' when it holds a fastening pin 3 in the fastening seat 6'.

We will now briefly describe the installation procedure of the fastening device 1 and the adjustment of a television set connected to it.

The fastening brackets 2' are connected to the surface to which it is desired to fix a television set, by arranging them in alignment to a plane parallel to a floor of a room and spaced by a preset amount according to the installation parameters, for example associated with the dimensions of the television set.

The fastening pins 3 are made integral with the television set and the spacer pins 22 are also put in place and connected to the television set.

At this point, the user may pick up the television set and position it close to the surface to which the fastening brackets 2' are connected.

By supporting the television set on the surface by means of the spacer pins 22 that hold the television set at the correct distance from the latter, the fastening pins 3 are positioned so as to be able to be held in the respective fastening seats 6' of the fastening brackets 2'.

The user proceeds to move the television set so as bring the fastening pins 3 closer to the respective entry areas 13' of the fastening seats 6'.

Advantageously, the entry areas 13' comprise a larger opening than the rest of the fastening seat 6' so as to facilitate the positioning of the pins 3 until the connection is established in an undercut between the latter and the fastening brackets 2'.

In addition, the entry areas 13' direct the movement of the fastening pins 3 towards the zone of the fastening seats 6' that determine the undercut fixed connection.

At this point, the user can cause the fastening pins 3 to slide along the sliding channel 26' parallel to the direction of application of the force of gravity until the fastening pins 3 go into abutment with the adjustment channel 27'.

At this point, the television set is connected to the fastening brackets 2' and it is possible to cause the fastening pins 3 to slide along the adjustment channel 27' that extends in a direction perpendicular to the direction of application of the force of gravity.

In particular, the fastening pins 3 can be positioned in various stable positions determined by the adjustment notches 28 present along the adjustment channel 27 that determine a different placement of the television set.

To the above-described embodiments of the device, a person skilled in the art, in order to satisfy contingent requirements, can make modifications, adaptations and replacements of elements with others that are functionally equivalent, without departing from the scope of the below claims. Each of the characteristics described as belonging to a possible embodiment of the invention can be realised independently from the other embodiments described.
According to an embodiment, the quick fastening device for television sets 1 comprises said at least one fastening seat 6,6' that forms an opening in the fastening plane 5,5' that does not permit the removal of the fastening pin 3 transversely to said fastening plane 5, 5'.

Thanks to the provision of this characteristic, the television set with the fastening pin 3 fixed to it is held by the edge of the device, thus moving it substantially with respect to the fastening plane 5,5' and preventing it from falling out, even accidentally, during insertion, even if it is inadvertently pushed in a direction counter to the gravitational action. According to an embodiment, said fastening seat 6,6' forms a balancing section for the fastening pin 3 that is not completely facing the open portion on the edge for the insertion of the pin into the seat.

According to an embodiment, said at least one fastening seat 6,6' allows the surface to which it is desired to fix a television set to be reached directly.

Thanks to the provision of this characteristic, it is possible to obtain devices that are very compact in their transverse direction, for example to the wall to which the television set is attached, and, in particular, allows the device to be also applied to walls that have protrusions corresponding to the device. For example, in the case of walls constructed with elements in relief, it will be sufficient to smooth out only those portions of the wall where the device will be supported, leaving the wall intact in its portion that is facing the fastening seat 6, 6', thus minimising the invasiveness of the assembly work.

According to one embodiment, the device 1 is not interposed between said fastening seat 6,6' and said surface to which it is desired to fix a television set.

Advantageously, when the wall is not perfectly planar, it will be much easier to find a position for the connection of the device to the wall when the device has a limited extent of its portion in contact with this wall.

According to one embodiment, the device 1 has a body with at least one portion that forms said fastening plane 4,4' which is prevented from being arranged overlapping said fastening seat.

According to one embodiment, the device 1 has a body made from a single part, for example a plate or sheet or lamina, for example a cut or milled and folded lamina, defining with its portions said fastening plane 4,4' and fastening plane 5,5'.

According to one embodiment, said fastening seat 6,6' defines at least one section with a continuous plurality of balancing positions for the fastening pin 3 suitable to being connected to a television set.

The provision of a device that permits the surface to which it is desired to fix a television set to be reached directly, while also having a section with a continuous plurality of balancing positions for the fastening pin 3, is particularly advantageous for those surfaces to which it is desired to fix a television set that are discontinuous or non-planar, because it allows the selection of a fastening position for the device to the surface that, although it is suitable, is not located exactly where it is desired to position the television set and, at the same time, thus allows the television set to be moved to the desired position by moving the fastening pin 3 by sliding it along the fastening seat 6, 6'.

## Claims

1. Quick fastening device for television sets (1) comprising:
- a pair of fastening brackets (2,2') suitable for being fixedly connected to a surface onto which it is wished to fix a television set;
- a pair of fastening pins (3) suitable for being fixedly connected to the television set;
- each of said fastening brackets (2,2') comprises an attachment plane (4,4') suitable for facing the surface onto which it is wished to fix the television set and a fastening plane (5,5') spaced from the attachment plane (4,4') suitable for facing the television set that it is wished to fixedly connect;
- each of said fastening brackets (2,2') comprises at least one fastening seat (6,6'), arranged on the fastening plane (5,5'), which receives said fastening pin (3) so as to determine an undercut fixed connection between said fastening pin (3) and said fastening seat (6,6');
- each of said fastening seats (6,6') comprises a perimeter (7,7') that defines the shape of the seat (6,6') with respect to the fastening bracket (2,2') in which such a perimeter (7,7') comprises at least one section (7a,7a');
- the section of the perimeter (7a,7a') of each of said fastening seats (6,6') that lies on the hastening plane (5,5') is an open section so as to be suitable for allowing the television to be fixedly connected to the surface in which said fastening pin (3) is received by said fastening seat (6,6') with motion substantially parallel to the fastening plane (5,5');
- each of the fastening seats (6, 6') comprises an entry area (13, 13') arranged to coincide with the section of the perimeter (7a, 7a') that is open on the fastening seat (6, 6'), and an adjustment channel (27, 27') wherein the fastening pin (3) can run and wherein the pin (3) can be positioned in a plurality of stable positions along the length of said adjustment channel (27, 27');
- each of the fastening seats (6, 6') comprises a sliding channel (26, 26') in which the fastening pin (3) can slide, which departs from the entry area (13, 13') and flows into the adjustment channel (27, 27');
- the adjustment channel (27, 27') is arranged in a manner substantially transverse to the sliding channel (26, 26') which substantially extends according to the direction of application of the force of gravity;
- each of the fastening seats (6, 6') is in the shape of an opening passing through the fastening bracket (2).

2. Quick fastening device for television sets (1) according to the previous claim, in which each of said fastening seats (6,6') forms an opening in the fastening plane (5,5') that does not permit the removal of the fastening pin (3) transversely to said fastening plane (5,5') and/or in which
said fastening seat (6,6') allows the surface to which it is desired to fix a television set to be reached directly and/or in which
the device (1) is not interposed between said fastening seat (6,6') and said surface to which it is desired to fix a television set and/or in which
the device (1) has a body with at least one portion that forms said fastening plane (4,4') which is prevented from being arranged overlapping said fastening seat, and/or in which
the device (1) has a body made from a single part, for example a plate or sheet or lamina, for example a cut or milled and folded lamina, defining with its portions said fastening plane (4,4') and fastening plane (5,5').

3. Quick fastening device for television sets (1) according to any of the previous claims, in which said fastening seat (6,6') defines at least one section with a continuous plurality of balancing positions for the fastening pin (3) suitable to being connected to a television set.

4. Quick fastening device for television sets (1) according to any one of the previous claims, wherein the section of the perimeter (7a,7a') of the fastening seats (6,6') that lies on the fastening plane (5,5') is such as to intersect a bracket perimeter (10,10') that constitutes the outer edge and therefore the outline of the fastening brackets (2,2') for the section thereof that lies on the fastening plane (5,5').

5. Quick fastening device for television sets (1) according to the previous claim, wherein said fastening pins (3) are cylinder-shaped with portions having variable diameter that comprise a first portion with greater diameter (15), a second portion with sorter diameter (16) and a third portion with greater diameter (17) in which the second portion with a smaller diameter (16) is located between the two other portions with a greater diameter (15) and (17) so that such a portion with a smaller diameter (16) constitutes an undercut region with respect to the rest of said fastening pins (3) so as to be able to create an undercut fixed connection when received by said fastening seats (6,6').

6. Quick fastening device for television sets (1) according to any one of the previous claims, wherein each of said fastening seats (6') comprises adjustment notches (28) that determine different positions in which the fastening pins (3) can be stably received.

7. Quick fastening device for television sets (1) according to claim 1, wherein the entry area (13,13') is provided with a larger opening with respect to the remaining part so as to make it easier for the fastening pins (3) to enter into the fastening seats (6,6').

8. Quick fastening device for television sets (1) according to any one of the previous claims, wherein the quick fastening device for televisions (1) comprises at least one spacer pin (22) suitable for being fixedly connected to a television so as to be adapted for the opposite part of the pin with respect to the part fixedly connected to the television to go into abutment with the surface onto which it is wished to fixedly connect the television, so as to be suitable for keeping a surface of a screen of a television parallel to the surface on which it is fixed or for slightly varying the inclination of such a screen with respect to such a surface.

9. Quick fastening device for television sets (1) according to any one of the previous claims, wherein the fastening brackets (2,2') are in the form of plate bent and shaped so as to comprise in a single piece the various parts of which it consists such as an attachment portion (8,8') that lies on the attachment plane (4,4') and is suitable for fixing the brackets (2,2') to the surface on which it is wished to fix the television set, a bracket portion (11,11') that lies on the fastening plane (5,5') and that comprises open portions of fastening seats (6,6') that receive the fastening pins (3) and finally the fastening brackets (2,2') also comprise joining portions (12,12') that join the attachment portions (8,8') and the bracket portion (11,11') lying on the two planes listed.

10. Quick fastening device for television sets (1) according to any one of the previous claims, wherein the fastening seats (6,6') comprise entry areas (13,13') with decreasing opening measured along a line parallel to the outer edge (10,10') of the brackets intersecting the perimeter (7,7') of the fastening seat (6,6'), going from the position near to the open side of the fastening seat (6,6') moving towards the remaining portion of fastening seats (6,6') until it has a portion with a substantially constant size, measured in the same way as before.

## Patentansprüche

1. Schnellbefestigungsvorrichtung für Fernsehgeräte (1), umfassend:
- ein Paar von Befestigungsbügeln (2, 2'), welche dazu geeignet sind, mit einer Fläche fest verbunden zu werden, an welcher ein Fernsehgerät befestigt werden soll;
- ein Paar von Befestigungsstiften (3), welche dazu geeignet sind, mit dem Fernsehgerät fest verbunden zu werden,
- wobei jeder der Befestigungsbügel (2, 2') eine Anbringebene (4, 4') umfasst, welche dazu geeignet ist, der Fläche, an welcher das Fernsehgerät befestigt werden soll, zugewandt zu sein, und eine von der Anbringebene (4, 4') beabstandete Befestigungsebene (5, 5') umfasst, welche dazu geeignet ist, dem Fernsehgerät zugewandt zu sein, das fest verbunden werden soll;
- wobei jeder der Befestigungsbügel (2, 2') wenigstens einen Befestigungssitz (6, 6') umfasst, welcher an der Befestigungsebene (5, 5') angeordnet ist und den Befestigungsstift (3) aufnimmt, um eine feste Hinterschnittverbindung zwischen dem Befestigungsstift (3) und dem Befestigungssitz (6, 6') festzulegen;
- wobei jeder der Befestigungssitze (6, 6') einen Umfang (7, 7') umfasst, welcher die Form des Sitzes (6, 6') in Bezug auf den Befestigungsbügel (2, 2') definiert, wobei ein solcher Umfang (7, 7') wenigstens einen Abschnitt (7a, 7a') umfasst;
- wobei der Abschnitt des Umfangs (7a, 7a') jedes der Befestigungssitze (6, 6'), welcher an der Befestigungsebene (5, 5') liegt, ein offener Abschnitt ist, um dazu geeignet zu sein, dem Fernseher zu erlauben, fest mit der Fläche verbunden zu werden, wobei der Befestigungsstift (3) von dem Befestigungssitz (6, 6') mit einer Bewegung im Wesentlichen parallel zu der Befestigungsebene (5, 5') aufgenommen ist;
- wobei jeder der Befestigungssitze (6, 6') einen Eintrittsbereich (13, 13') umfasst, welcher dazu eingerichtet ist, mit dem Abschnitt des Umfangs (7a, 7a') zusammenzufallen, der an dem Befestigungssitz (6, 6') offen ist, und einen Einstellkanal (27, 27') umfasst, in welchem der Befestigungsstift (3) laufen kann und in welchem der Stift (3) in einer Mehrzahl von stabilen Positionen entlang der Länge des Einstellkanals (27, 27') positionierbar ist;
- wobei jeder der Befestigungssitze (6, 6') einen Gleitkanal (26, 26') umfasst, in welchem der Befestigungstift (3) gleiten kann und welcher von dem Eintrittsbereich (13, 13') wegführt und in den Einstellkanal (27, 27') übergeht;
- wobei der Einstellkanal (27, 27') in einer im Wesentlichen quer zu dem Gleitkanal (26, 26') liegenden Weise angeordnet ist, welcher sich im Wesentlichen gemäß der Richtung der Einwirkung der Gravitationskraft erstreckt;
- wobei jeder der Befestigungssitze (6, 6') die Form einer Öffnung aufweist, welche durch den Befestigungsbügel (2) hindurch geht.

2. Schnellbefestigungsvorrichtung für Fernsehgeräte (1) gemäß dem vorhergehenden Anspruch, wobei jeder der Befestigungssitze (6, 6') eine Öffnung in der Befestigungsebene (5, 5') bildet, welche das Entfernen des Befestigungsstifts (3) quer zu der Befestigungsebene (5, 5') nicht erlaubt oder/und wobei
der Befestigungssitz (6, 6') erlaubt, die Fläche, an welcher ein Fernsehgerät befestigt werden soll, direkt zu erreichen oder/und wobei die Vorrichtung (1) nicht zwischen dem Befestigungssitz (6, 6') und der Fläche, an welcher ein Fernsehgerät befestigt werden soll, angeordnet ist oder/und wobei
die Vorrichtung (1) einen Körper mit wenigstens einem Abschnitt aufweist, welcher die Befestigungsebene (4, 4') bildet, die daran gehindert wird, überlappend mit dem Befestigungssitz angeordnet zu sein, oder/und wobei
die Vorrichtung (1) einen aus einem einzelnen Teil, beispielsweise einer Platte oder einem Blech oder einem Blättchen, beispielsweise ein ausgeschnittenes oder gefrästes oder gefaltetes Blättchen, hergestellten Körper aufweist, welcher mit seinen Abschnitten die Befestigungsebene (4, 4') und Befestigungsebene (5, 5') definiert.

3. Schnellbefestigungsvorrichtung für Fernsehgeräte (1) nach einem der vorhergehenden Ansprüche, wobei der Befestigungsitz (6, 6') wenigstens einen Abschnitt mit einer kontinuierlichen Mehrzahl von Ausgleichspositionen für den Befestigungsstift (3) definiert, der dazu geeignet ist, mit einem Fernsehgerät verbunden zu werden.

4. Schnellbefestigungsvorrichtung für Fernsehgeräte (1) nach einem der vorhergehenden Ansprüche, wobei der Abschnitt des Umfangs (7a, 7a') der Befestigungssitze (6, 6'), welcher an der Befestigungsebene (5, 5') liegt, derart ist, dass er einen Bügelumfang (10, 10') schneidet, der den äußeren Rand und somit die Kontur des Befestigungsbügels (2, 2') für dessen Abschnitt bildet, welcher an der Befestigungsebene (5, 5') liegt.

5. Schnellbefestigungsvorrichtung für Fernsehgeräte (1) nach dem vorhergehenden Anspruch, wobei die Befestigungsstifte (3) zylinderförmig mit Abschnitten sind, welche einen veränderlichen Durchmesser aufweisen und welche einen ersten Abschnitt mit größerem Durchmesser (15), einen zweiten Abschnitt mit kleinerem Durchmesser (16) und einen dritten Abschnitt mit größerem Durchmesser (17) umfassen, wobei der zweite Abschnitt mit einem kleineren Durchmesser (16) zwischen den beiden anderen Abschnitten mit einem größeren Durchmesser (15) und (17) angeordnet ist, so dass ein Abschnitt mit einem kleineren Durchmesser (16) einen Hinterschnittbereich in Bezug auf den Rest der Befestigungstifte (3) bildet, um dazu in der Lage zu sein, bei Aufnahme in den Befestigungssitzen (6, 6') eine feste Hinterschnittverbindung zu erzeugen.

6. Schnellbefestigungsvorrichtung für Fernsehgeräte (1) nach einem der vorhergehenden Ansprüche, wobei jeder der Befestigungssitze (6') Einstellnuten (28) umfasst, welche verschiedene Positionen festlegen, in denen die Befestigungsstifte (3) stabil aufnehmbar sind.

7. Schnellbefestigungsvorrichtung für Fernsehgeräte (1) nach Anspruch 1, wobei der Eintrittsbereich (13, 13') mit einer größeren Öffnung in Bezug auf den verbleibenden Teil bereitgestellt ist, um es den Befestigungsstiften (3) zu erleichtern, in die Befestigungssitze (6, 6') einzutreten.

8. Schnellbefestigungsvorrichtung für Fernsehgeräte (1) nach einem der vorhergehenden Ansprüche, wobei die Schnellbefestigungsvorrichtung für Fernsehgeräte (1) wenigstens einen Abstandshalterstift (22) umfasst, welcher dazu geeignet ist, fest mit einem Fernseher verbunden zu werden, so dass der entgegengesetzte Teil des Stifts in Bezug auf den fest mit dem Fernseher verbundenen Teil dazu eingerichtet ist, in Anlage mit der Fläche zu treten, an welche der Fernseher fest verbunden werden soll, um dazu geeignet zu sein, eine Fläche eines Bildschirms eines Fernsehers parallel zu der Fläche zu halten, an welcher er befestigt ist oder die Neigung eines solchen Bildschirms in Bezug auf eine solche Fläche leicht zu variieren.

9. Schnellbefestigungsvorrichtung für Fernsehgeräte (1) nach einem der vorhergehenden Ansprüche, wobei die Befestigungsbügel (2, 2') die Form einer Platte aufweisen, die gebogen und geformt ist, um in einem einzelnen Stück die verschiedenen Teile zu umfassen, aus denen er besteht, wie etwa einen Anbringabschnitt (8, 8'), welcher an der Anbringebene (4, 4') liegt und dazu geeignet ist, die Bügel (2, 2') an der Fläche zu befestigen, an welcher das Fernsehgerät befestigt werden sollen, einen Bügelabschnitt (11, 11'), welcher an der Befestigungsebene (5, 5') liegt und welcher offene Abschnitte der Befestigungssitze (6, 6') umfasst, die die Befestigungsstifte (3) aufnehmen und schließlich umfassen die Befestigungsbügel (2, 2') auch Verbindungsabschnitte (12, 12'), welche die Anbringabschnitte (8, 8') und den Bügelabschnitt (11, 11') verbinden, die an den beiden genannten Ebenen liegen.

10. Schnellbefestigungsvorrichtung für Fernsehgeräte (1) nach einem der vorhergehenden Ansprüche, wobei die Befestigungssitze (6, 6') Eintrittsbereiche (13, 13') mit abnehmender Öffnung umfassen, gemessen entlang einer Linie parallel zu dem äußeren Rand (10, 10') der Bügel, welcher den Umfang (7, 7') des Befestigungssitzes (6, 6') schneidet, ausgehend von der Position nahe der offenen Seite des Befestigungssitzes (6, 6') in Richtung zu dem verbleibenden Abschnitt der Befestigungssitze (6, 6'), bis sie einen Abschnitt mit einer im Wesentlichen konstanten Größe aufweist, gemessen in der gleichen Weise wie zuvor.

## Revendications

1. Dispositif de fixation rapide pour postes de télévision (1), comprenant :
une paire de supports de fixation (2, 2') appropriés pour être raccordés de manière fixe à une surface sur laquelle on souhaite fixer un poste de télévision ;
une paire de goujons de fixation (3) appropriés pour être raccordés de manière fixe au poste de télévision ;
chacun desdits supports de fixation (2, 2') comprend un plan de fixation (4, 4') approprié pour faire face à la surface sur laquelle on souhaite fixer le poste de télévision et un plan de fixation (5, 5') espacé du plan de fixation (4, 4') approprié pour faire face au poste de télévision que l'on souhaite raccorder de manière fixe ;
chacun desdits support de fixation (2, 2') comprend au moins un siège de fixation (6, 6') agencé sur le plan de fixation (5, 5') qui reçoit ledit goujon de fixation (3) afin de déterminer un raccordement fixe à gorge entre ledit goujon de fixation (3) et ledit siège de fixation (6, 6') ;
chacun desdits sièges de fixation (6, 6') comprend un périmètre (7, 7') qui définit la forme du siège (6, 6') par rapport au support de fixation (2, 2') dans lequel un tel périmètre (7, 7') comprend au moins une section (7a, 7a') ;
la section du périmètre (7a, 7a') de chacun desdits sièges de fixation (6, 6') qui se trouve sur le plan de fixation (5, 5') est une section ouverte afin d'être appropriée pour permettre le raccordement fixe de la télévision à la surface dans laquelle ledit goujon de fixation (3) est reçu par ledit siège de fixation (6, 6') avec un mouvement sensiblement parallèle au plan de fixation (5, 5') ;
chacun des sièges de fixation (6, 6') comprend une zone d'entrée (13, 13') agencée pour coïncider avec la section du périmètre (7a, 7a') qui est ouverte sur le siège de fixation (6, 6'), et un canal d'ajustement (27, 27') dans lequel le goujon de fixation (3) peut s'étendre et dans lequel le goujon (3) peut être positionné dans une pluralité de positions stables le long de la longueur dudit canal de réglage (27, 27') ;
chacun des sièges de fixation (6, 6') comprend un canal de coulissement (26, 26') dans lequel le goujon de fixation (3) peut coulisser, qui s'éloigne de la zone d'entrée (13, 13') et circule dans le canal de réglage (27, 27') ;
le canal de réglage (27, 27') est agencé d'une manière sensiblement transversale par rapport au canal de coulissement (26, 26') qui s'étend sensiblement selon la direction d'application de la force de gravité ;
chacun des sièges de fixation (6, 6') à la forme d'une ouverture passant par le support de fixation (2).

2. Dispositif de fixation rapide pour postes de télévision (1) selon la revendication précédente, dans lequel chacun desdits sièges de fixation (6, 6') forme une ouverture dans le plan de fixation (5, 5') qui ne permet pas le retrait du goujon de fixation (3) transversalement par rapport audit plan de fixation (5, 5'), et/ou dans lequel :
ledit siège de fixation (6, 6') permet d'atteindre directement la surface sur laquelle on souhaite fixer un poste de télévision, et/ou dans lequel :
le dispositif (1) n'est pas intercalé entre ledit siège de fixation (6, 6') et ladite surface sur laquelle on souhaite fixer un poste de télévision, et/ou, dans lequel :
le dispositif (1) a un corps avec au moins une partie qui forme ledit plan de fixation (4, 4') dont l'agencement recouvrant ledit siège de fixation est empêché, et/ou dans lequel :
le dispositif (1) a un corps réalisé d'un seul tenant, par exemple une plaque ou feuille ou lame, par exemple une lame découpée ou meulée et pliée, définissant avec ses parties, ledit plan de fixation (4, 4') et ledit plan de fixation (5, 5').

3. Dispositif de fixation rapide pour postes de télévision (1) selon l'une quelconque des revendications précédentes, dans lequel ledit siège de fixation (6, 6') définit au moins une section avec une pluralité continue de positions d'équilibrage pour le goujon de fixation (3) approprié pour être raccordé à un poste de télévision.

4. Dispositif de fixation rapide pour postes de télévision (1) selon l'une quelconque des revendications précédentes, dans lequel la section du périmètre (7a, 7a') des sièges de fixation (6, 6') qui se trouve sur le plan de fixation (5, 5') est telle qu'elle coupe un périmètre de support (10, 10') qui constitue le bord externe et par conséquent le contour des supports de fixation (2, 2') pour leur section qui se trouve sur le plan de fixation (5, 5').

5. Dispositif de fixation rapide pour postes de télévision (1) selon la revendication précédente, dans lequel lesdits goujons de fixation (3) sont de forme cylindrique avec des parties ayant un diamètre variable qui comprennent une première partie avec un plus grand diamètre (15), une deuxième partie avec un diamètre plus court (16) et une troisième partie avec un plus grand diamètre (17), dans lequel la deuxième partie avec un plus petit diamètre (16) est positionnée entre les deux autres parties avec un plus grand diamètre (15) et (17) de sorte qu'une telle partie avec un plus petit diamètre (16) constitue une région à gorge par rapport au reste desdits goujons de fixation (3) afin de pouvoir créer un raccordement fixe à gorge lorsqu'ils sont reçus par lesdits sièges de fixation (6, 6').

6. Dispositif de fixation rapide pour postes de télévision (1) selon l'une quelconque des revendications précédentes, dans lequel chacun desdits sièges de fixation (6') comprend des encoches de réglage (28) qui déterminent différentes positions dans lesquelles les goujons de fixation (3) peuvent être reçus de manière stable.

7. Dispositif de fixation rapide pour postes de télévision (1) selon la revendication 1, dans lequel la zone d'entrée (13, 13') est prévue avec une plus grande ouverture par rapport à la partie restante afin de faciliter l'entrée des goujons de fixation (3) dans les sièges de fixation (6, 6').

8. Dispositif de fixation rapide pour postes de télévision (1) selon l'une quelconque des revendications précédentes, dans lequel le dispositif de fixation rapide pour postes de télévision (1) comprend au moins un goujon d'espacement (22) approprié pour être raccordé de manière fixe à une télévision afin d'être adapté pour la partie opposée du goujon par rapport à la partie raccordée de manière fixe à la télévision pour venir en butée avec la surface sur laquelle on souhaite raccorder de manière fixe la télévision, afin d'être approprié pour maintenir une surface d'un écran d'une télévision parallèle à la surface sur laquelle elle est fixée ou pour modifier légèrement l'inclinaison d'un tel écran par rapport à une telle surface.

9. Dispositif de fixation rapide pour postes de télévision (1) selon l'une quelconque des revendications précédentes, dans lequel les supports de fixation (2, 2') se présentent sous la forme d'une plaque pliée et formée afin de comprendre en une seule pièce les différentes parties qui la composent comme une partie de fixation (8, 8') qui se trouve sur le plan de fixation (4, 4') et est appropriée pour fixer les supports (2, 2') sur la surface sur laquelle on souhaite fixer le poste de télévision, une partie de support (11, 11') qui se trouve sur le plan de fixation (5, 5') et qui comprend des parties ouvertes des sièges de fixation (6, 6') qui reçoivent les goujons de fixation (3) et finalement les supports de fixation (2, 2') comprennent également des parties d'assemblage (12, 12') qui assemblent les parties de fixation (8, 8') et la partie de support (11, 11') se trouvant sur les deux plans mentionnés.

10. Dispositif de fixation rapide pour postes de télévision (1) selon l'une quelconque des revendications précédentes, dans lequel les sièges de fixation (6, 6') comprennent des zones d'entrée (13, 13') avec une ouverture décroissante, mesurée le long d'une ligne parallèle au bord externe (10, 10') des supports coupant le périmètre (7, 7') du siège de fixation (6, 6'), allant de la position à proximité du côté ouvert du siège de fixation (6, 6') vers la partie restante des sièges de fixation (6, 6') jusqu'à ce que l'on trouve une partie avec une taille sensiblement constante, mesurée de la même manière que celle décrite précédemment.
